# EUROPEAN PATENT APPLICATION

(11) **EP 3 285 529 A1**
(43) Date of publication of application: **21.02.2018**
(21) Application number: 16290153.2
(22) Date of filing: 17.08.2016
(51) Int. Cl.: H04W 72/04, H04W 84/12

(54) **A FREQUENCY BAND SELECTOR AND METHOD FOR WIRELESS CONNECTIVITY**

(71) Applicant: ALCATEL LUCENT, 92100 Boulogne-Billancourt (FR)
(72) Inventor: Ligata, Amir, 2018 Antwerpen (BE); Gacanin, Haris, 2018 Antwerpen (BE)
(74) Representative: Plas, Axel Ivo Michel

(57) **Abstract**

A frequency band selector for wireless connectivity between a client (102) and an access point (101) that both support multiple frequency bands, comprising:
- a memory (401) to memorize a preferred frequency band (PREF1) and an alternative frequency band (ALT1);
- a connection establisher (402) that establishes connection via the preferred frequency band (PREF1), and switches to the alternative frequency band (ALT1) in case of disconnection over the preferred frequency band (PREF1);
- a disconnection detector (403) that detects disconnection over the preferred frequency band (PREF1);
- a signal strength monitor (404) that monitors the signal strength (RSSI) of the preferred frequency band (PREF1) at the client (102) while being connected over the alternative frequency band (ALT1); and
- a triggering unit (407) that triggers connection re-establishment via the preferred frequency band (PREF1) when the signal strength (RSSI) exceeds a predefined threshold (T2).

## Description

### Technical Field

The present invention generally relates to wireless local area networks (WLANs), for instance WiFi networks, that enable any electronic device equipped with WLAN transceiver or so called WLAN client within the coverage range of the WLAN network, e.g. a laptop, a tablet computer, a smartphone, a printer, a media player, etc., to access the resources of the WLAN network via a wireless connection established between the WLAN client and a so called WLAN access point or hotspot. More particularly, the present invention concerns improved selection of the frequency band that is used for wireless connectivity between a WLAN client and a WLAN access point in WLAN networks that support multiple frequency bands.

### Background

Nowadays, WLAN access points such as WiFi hotspots support multiple frequency bands for connectivity with client devices. Recently developed WiFi access points for instance are able to establish connections over the 2.4 GHz Ultra High Frequency (UHF) band and to establish connections over the 5 GHz Super High Frequency Industrial, Scientific and Medical (SHF ISM) band. Certain WiFi access points support these frequency bands simultaneously, other WiFi access points support these frequency bands in a time division multiplexed mode.

Also WLAN clients recently tend to support multiple frequency bands. Smartphones, tablets, laptops or other electronic devices that are equipped with WiFi chipsets that support certain flavours of the IEEE 802.11 standard, e.g. 802.11 b, 802.11g, 802.11n or 802.11 ac, are able to establish wireless connections over both the 2.4 GHz frequency band and the 5 GHz frequency band. The factory settings, saved profiles or user preferences stored in these electronic devices determine which frequency band is selected to establish WLAN connectivity, either automatically or upon user instruction, when the electronic device is within the range of a WiFi access point.

The range of WLAN access points typically extends up to a few tens of metres. The range of a WiFi access point for instance may reach about 20 metres indoors and up to 50 metres outdoors, depending on various environmental parameters such as the presence of buildings, walls, interference sources such as other WiFi networks, weather conditions, etc. The coverage range also depends on the frequency band. The 5 GHz frequency band has a coverage range that is shorter than the coverage range of the 2.4 GHz frequency band supported by the same WiFi access point.

The frequency bands supported by a single access point further differ in their achievable throughput, again impacted by the various environmental parameters such as interference sources. Close to the WiFi access point, the 5 GHz frequency band offers a high throughput that may be desired for certain applications or services such as high definition video streaming, videoconferencing, etc. When moving away from the WiFi access point, the signal strength and achievable throughput over the 5 GHz frequency band drop. An intelligent WiFi client that supports both frequency bands consequently shall disconnect or disassociate from the 5 GHz frequency band as soon as the signal strength measured for this 5 GHz frequency band drops below a certain threshold, and establish connectivity or associate with the 2.4 GHz frequency band that has a greater coverage range, albeit with achievable throughput rates that are lower than the bitrates achievable over the 5 GHz frequency band in close vicinity of the WiFi access point.

### Summary

A WLAN client typically establishes WLAN connectivity with a WLAN access point over the preferred frequency band, for instance the 5 GHz frequency band in case of dual band WiFi, in order to benefit from the higher achievable throughput offered by this preferred frequency band. As soon as the signal strength of the preferred frequency band, measured by the WLAN client, drops below a certain threshold, the WLAN client shall disassociate from the preferred frequency band, i.e. the WLAN client shall interrupt connectivity over the preferred frequency band, and the WLAN client shall associate with an alternative frequency band, i.e. establish connectivity over the alternative frequency band, e.g. the 2.4 GHz frequency band in case of dual band WiFi, in order to maintain connection to the WLAN access point. Thereafter, the WLAN client will remain connected over the alternative frequency band, even if the WLAN client has moved closer to the WLAN access point as a result of which the preferred frequency band would again offer a higher throughput and consequently improved user experience. A lot of existing WLAN clients consequently experience a suboptimal performance in terms of achievable throughput as a result of this behaviour.

It is an objective of the present invention to disclose a frequency band selector and corresponding method for selecting a WLAN frequency band that is more efficient. More precisely, it is an objective of the present invention to provide WLAN frequency band selection technology that avoids that a WLAN client remains endlessly connected via the suboptimal alternative frequency band, thereby enhancing the effective overall throughput and user experience in WLANs.

In order to achieve one or more of the above objectives, embodiments of the present invention disclose a frequency band selector for wireless connectivity between a client that supports multiple frequency bands and an access point that also supports these multiple frequency bands, as defined by claim 1, the frequency band selector comprising:
- a memory adapted to maintain knowledge on a preferred frequency band and alternative frequency band for the client;
- a connection establisher adapted to establish a connection between the client and the access point over the preferred frequency band, and adapted to switch connectivity between the client and the access point to the alternative frequency band in case of disconnection over the preferred frequency band;
- a disconnection detector adapted to detect disconnection between the client and the access point over the preferred frequency band;
- a signal strength monitor adapted to monitor signal strength of the preferred frequency band at the client at least while being connected to the access point over the alternative frequency band;
- a comparator adapted to compare the signal strength of the preferred frequency band at the client with a predefined threshold; and
- a triggering unit adapted to trigger connection establishment between the client and the access point over the preferred frequency band when the signal strength exceeds the predefined threshold.

Thus, embodiments of the invention shall measure the signal strength of the preferred frequency band as soon as the WLAN connectivity over the preferred frequency band is discontinued and a switch is made to the alternative frequency band. Disconnection from the preferred frequency band and switching to the alternative frequency band may for instance take place automatically as soon as the signal strength of the preferred frequency band experienced by the WLAN client drops below a certain (first) predefined threshold, for example -70 dB. Through measuring the signal strength of the preferred frequency band while being connected over the alternative frequency band, either continuously or periodically at a certain pace, the WLAN client can compare the measured signal strength with a second predefined threshold, for example -50 dB, and detect when the signal strength of the preferred frequency band exceeds this second predefined threshold. As soon as this happens, embodiments of the invention will trigger re-establishment of the WLAN connection over the preferred frequency band in order to benefit from the higher throughput offered by this preferred frequency band. Triggering logic thereto shall trigger for instance a connection reset at the WLAN client as a result of which the WLAN client shall again connect with the WLAN access point over the preferred frequency band. Alternatively, the triggering unit may force the WLAN transceiver in the WLAN client to connect to the preferred frequency band, for instance via the IEEE 802.11v protocol for remote WLAN client management.

The user experience in terms of throughput is continuously optimized depending on the location of the WLAN client vis-à-vis the WLAN access point and measured band availability at the WLAN client. Furthermore, the monitoring of the signal strength of the preferred frequency band while being connected over the alternative frequency band, and the triggering of re-connection over the preferred frequency band as soon as the monitored signal strength exceeds a predefined threshold takes place at the WLAN client, does not affect any parameter settings at the WLAN access point and consequently also does not affect other WLAN clients or users.

In embodiments of the frequency band selector according to the present invention, as defined by claim 2, the client is a WiFi client and the access point is a WiFi access point.

Indeed, although not limited thereto, the invention is particularly useful in WiFi networks with dual band, dual radio access points and client devices that are able to connect via both frequency bands. The high frequency WiFi band has a shorter reach but may be preferred because of the higher achievable throughput close to the access point. The low frequency band has a more moderate achievable throughput but serves as an alternative to maintain connectivity when the client device moves farther away from the access point. In home or office environments where users take their devices from one room to another, embodiments of the present invention enable to optimize the throughput and user experience by steering the frequency band used for WiFi connectivity to a more preferable band whenever the right conditions are met. Moreover, embodiments of the present invention can take benefit of existing TR-181 parameters such as the signal strength and authentication state, at present already maintained for each access point and frequency band in WiFi clients, in the algorithm to trigger re-connecting via the more preferred high frequency band. In other words, WiFi clients that desire to take benefit of the present invention need no initialization and maintenance of additional parameters, leaving the impact at the client side also limited.

In embodiments of the frequency band selector according to the present invention, as defined by claim 3, the multiple frequency bands comprise a 2.4 GHz frequency band and a 5 GHz frequency band, and the preferred frequency band corresponds to the 5 GHz frequency band and the alternative frequency band corresponds to the 2.4 GHz frequency band.

Indeed, as mentioned here above, the 5 GHz frequency band would typically be preferred in WiFi networks because of the higher achievable bandwidth. The 2.4 GHz frequency band would be identified as the alternative frequency band. The skilled person however will appreciate that the invention is applicable with comparable advantages when other frequency bands are supported, e.g. in future flavours of WiFi or alternatively in non-WiFi WLANs that support plural frequency bands.

In embodiments of the frequency band selector according to the present invention, as defined by claim 4, the signal strength corresponds to the Received Signal Strength Indicator or RSSI.

Indeed, although alternatives exist, a preferred parameter indicative for the signal strength of the preferred frequency band as perceived by a WLAN client, is the measured RSSI. In WiFi networks, the RSSI is already tracked to determine when the connectivity should be switched from the preferred frequency band to the alternative frequency band. The current invention may take advantage thereof and also monitor the RSSI during connectivity over the alternative frequency band to use this RSSI as a parameter in the decision process to re-connect via the preferred frequency band.

In addition to a frequency band selector as defined by claim 1, embodiments of the present invention also concern a method for selecting a frequency band for wireless connectivity between a client that supports multiple frequency bands and an access point that also supports these multiple frequency bands, as defined by claim 5, the method comprising:
- maintaining knowledge on a preferred frequency band and an alternative frequency band for the client;
- establishing a connection between the client and the access point over the preferred frequency band and switching connectivity between the client and the access point to the alternative frequency band in case of disconnection over the preferred frequency band;
- detecting disconnection between the client and the access point over the preferred frequency band;
- monitoring a signal strength of the preferred frequency band at the client at least while being connected to the access point over the alternative frequency band;
- comparing the signal strength of the preferred frequency band at the client with a predefined threshold; and
- triggering connection establishment between the client and the access point over the preferred frequency band when the signal strength exceeds the predefined threshold.

### Brief Description of the Drawings

Fig. 1 illustrates a situation wherein a WLAN client 102 applies an embodiment of the method for frequency band selection according to the present invention during connection with a WLAN access point 101;
Fig. 2A illustrates the measured RSSI over time in the situation of Fig. 1;
Fig. 2B illustrates the throughput experienced by the WLAN client 102 over time in the situation of Fig. 1;
Fig. 3 represents a flow diagram illustrating the steps in an embodiment of the method for frequency band selection according to the present invention;
Fig. 4 shows the functional blocks of an embodiment of the frequency band selector according to the present invention; and
Fig. 5 shows a computing system suitable for hosting embodiments of the frequency band selector according to the present invention, or components thereof, and suitable for implementing embodiments of the method for frequency band selection according to the present invention, or steps thereof.

### Detailed Description of Embodiment(s)

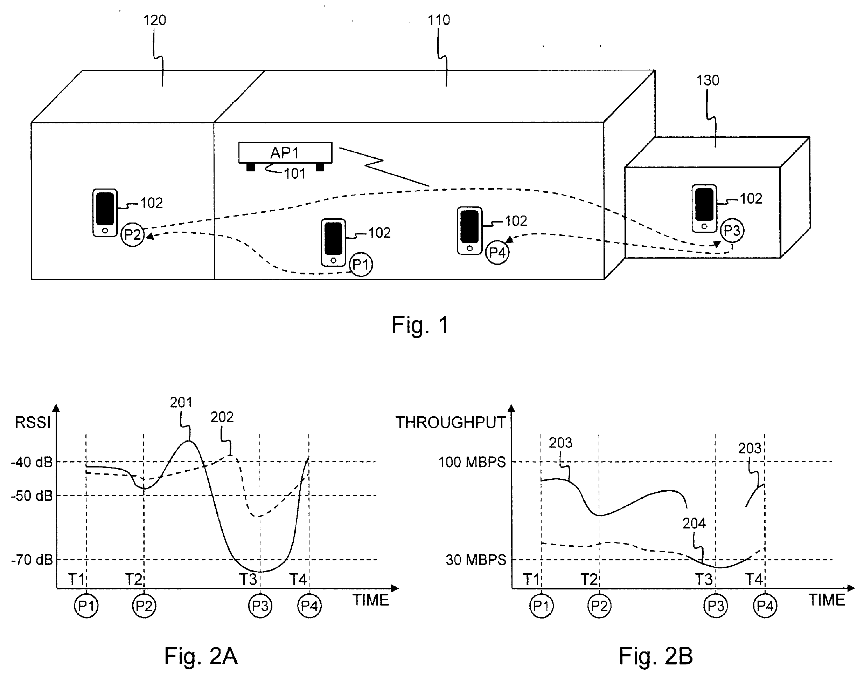

Fig. 1 shows an office (or home) environment comprising a main office room 110 equipped with a WiFi access point 101 or AP1, a meeting room 120 and a separate block 130 hosting for instance a paper archive. Fig. 1 further shows the trajectory followed by the user of WiFi client 102, e.g. a smartphone or tablet PC. At time instant T1, the user is in position P1, located in the main office room 110 close to access point 101. The user walks to the meeting room 120 and is in position P2 in the meeting room at time instant T2. From the meeting room 120, the user walks to the paper archive 130 and thereto passes through the main office room 110. At time instant T3, the user is in position P3 in the paper archive block 130. At last, the user returns to the main office room 110 and arrives in position P4 at time instant T4. All the time, from time instant T1 to time instant T4, the user carries WiFi client 102 with him/her, as indicated in Fig. 1. The WiFi client 102 is supposed to automatically connect and authenticate with WiFi access point 101 which may for instance provides wireless access to the enterprise network and/or public networks like the internet.

Fig. 2A shows the evolution in time of the RSSI or signal strength 201 of the 5 GHz frequency band supported by access point 101, as measured by WiFi client 102 between time instant T1 and time instant T4. Similarly, Fig. 2A shows the evolution in time of the RSSI or signal strength 202 of the 2.4 GHz frequency band supported by access point 101, as measured by WiFi client 102 between time instant T1 and time instant T4. At P1, WiFi client 102 is connected with access point 101 via the 5 GHz frequency band. This is supposed to be the preferred frequency band as this frequency band offers higher throughput or bandwidth. The user of WiFi client 102 may have stored in his user profile that the 5 GHz frequency band represents the preferred frequency band for connection with access point 101 and the 2.4 GHz frequency band represents an alternative frequency band for connectivity with access point 101. As a result, when switching on WiFi client 102 at T1 in location P1, the WiFi client 102 automatically associates and authenticates with access point 101 via the 5 GHz frequency band. Although the signal strength 201 of the 5 GHz frequency band measured by WiFi client 102 decreases slightly when moving from P1 to P2, the WiFi client 102 shall stay connected with access point 101 via the preferred 5 GHz frequency band between T1 and T2. At some point in time between T2 and T3, i.e. when the user is on its way from the meeting room 120 to the paper archive 130, the signal strength 201 of the 5 GHz frequency band measured by the WiFi client 102 drops below -70 dB. This passing of the -70 dB threshold will trigger WiFi client 102 to automatically switch from the preferred 5 GHz frequency band to the alternative 2.4 GHz frequency band. As indicated by dashed line 202, the signal strength of the 2.4 GHz stays above -70 dB at any location on the trajectory of WiFi client 102 which is explained by the fact that this lower frequency band has a greater range covering the main office room 110, meeting room 120 and the paper archive box 130, whereas the range of the 5 GHz frequency band seems not to extend to the paper archive box 130. WiFi client 102 hence disassociates from the 5 GHz frequency band and associates with the 2.4 GHz frequency band to stay connected with access point 101. Later, at some point in time between T3 and T4, i.e. when the user is returning from the paper archive box 130 to the main office room 110, the signal strength 201 of the 5 GHz frequency band measured at the WiFi client 102 again exceeds -50 dB. The passing of the -50 dB threshold will trigger the WiFi client 102 to reconnect with access point 101 via the preferred 5 GHz frequency band. The WiFi client 102 automatically disassociates from the alternative 2.4 GHz frequency band and re-associates with the preferred 5 GHz frequency band. This way, connectivity with access point 101 is maintained but the WiFi client 102 again benefits from the higher throughput that the preferred 5 GHz frequency band is offering.

Fig. 2B shows the evolution in time of the throughput 203 which the WiFi client 102 enjoys while being connected to access point 101 via the preferred 5 GHz frequency band, as well as the throughput 204 which the WiFi client 102 enjoys while being connected to access point 101 via the alternative 2.4 GHz frequency band in the short time interval around T3 where the user has entered the paper archive box 130. The dashed parts of line 204 represent the throughput that WiFi client 102 would experience if connected to WiFi access point 101 via the 2.4 GHz frequency band during these time intervals where connection is established via the 5 GHz frequency band. As long as the WiFi client 102 is connected over the preferred 5 GHz frequency band, the throughput varies between say 60 Mbps and 80 Mbps. When connected to the access point 101 via the 2.4 GHz frequency band, the throughput experienced by the WiFi client 102 varies slightly around say 30 Mbps, i.e. substantially lower but the WiFi client 102 stays connected. Thanks to the present invention, the WiFi client 102 returns to data rates between 60 Mbps and 80 Mbps as soon as the signal strength of the 5 GHz frequency band again exceeds -50 dB and connection via the 5 GHz frequency band is re-established.

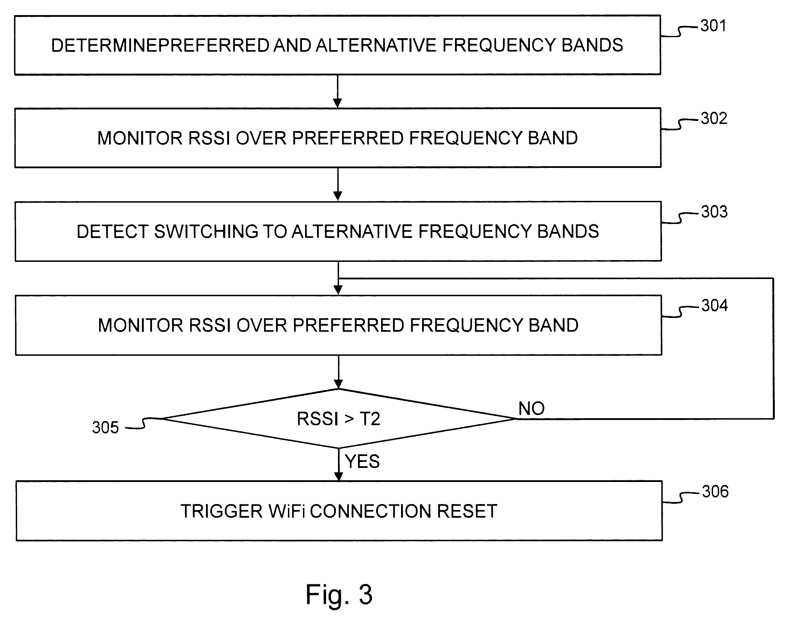

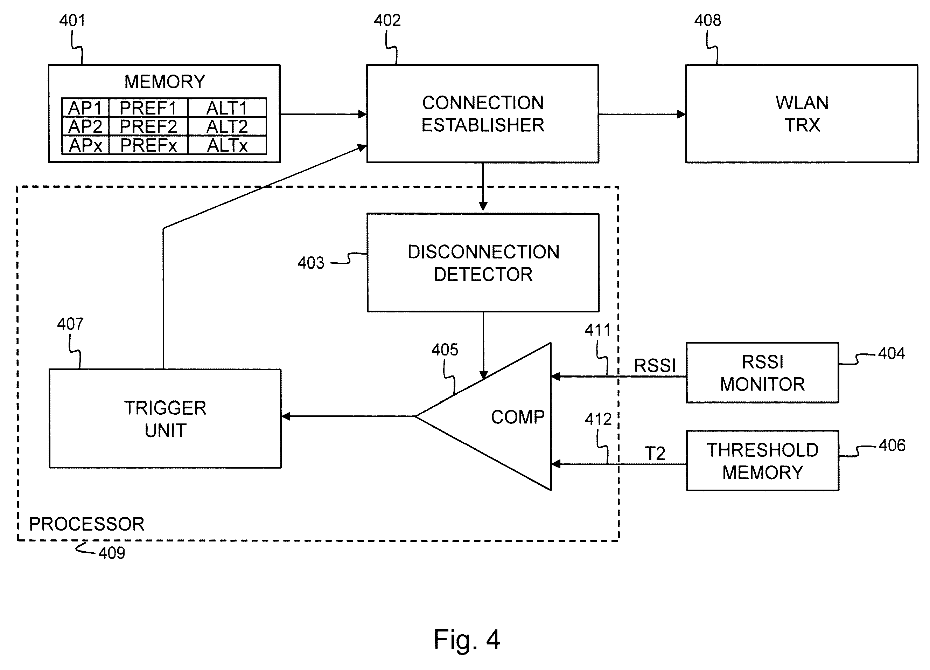

Fig. 3 shows the different steps that are executed by the WiFi client 102 in line with an embodiment of the frequency band selection method according to the invention. Fig. 4 shows the functional blocks in WiFi client 102 that jointly represent an embodiment of the frequency band selector according to the present invention. In a first step 301, the WiFi client 102 determines the preferred and alternative frequency bands for establishing connection with access point 101, and establishes connection via the preferred frequency band. The WiFi client 102 thereto has a memory 401 wherein it maintains per access point what the preferred frequency band is for connectivity with that access point and what the alternative frequency band is for connectivity with that access point. In Fig. 4, memory 401 contains three entries for respective access points AP1, AP2 and AP3. For each of these three access points AP1, AP2 and AP3, the respective preferred frequency band PREF1, PREF2 and PREF3, and the respective alternative frequency band ALT1, ALT2, ALT3 is memorized. As already indicated here above, for access point AP1 or 101, the preferred frequency band PREF1 corresponds to the 5 GHz frequency band whereas te alternative frequency band ALT1 corresponds to the 2.4 GHz frequency band. Depending on factory settings, certain profiles or user preferences, the selection of the preferred and alternative frequency bands may differ for different access points. The connection establisher 402 in step 301 learns from memory 401 that the 5 GHz frequency band is the preferred frequency band PREF1 for access point AP1 and instructs the WLAN transceiver 408 to establish a WiFi connection between WiFi client 102 and access point 101 over the 5 GHz radio interface of these devices. The connection established 402 further maintains the following parameters for WiFi client 102:
- as5G: a boolean parameter whose value indicates if the WiFi client 102 is associated (value = true) with access point 101 via the 5 GHz frequency band or disassociated (value = false) from access point 101 over the 5 GHz frequency band;
- as2G4: a boolean parameter whose value indicates if the WiFi client 102 is associated (value = true) with access point 101 via the 2.4 GHz frequency band or disassociated (value = false) from access point 101 over the 2.4 GHz frequency band;
- ss5G: a parameter whose value corresponds to the measured RSSI or signal strength for the 5 GHz frequency band access point 101; and
- ss2G4: a parameter whose value corresponds to the measured RSSI or signal strength for the 2.4 GHz frequency band access point 101.
The value of these parameters is readily available from the following Broadband Forum TR-181 standard parameters that are maintained in WiFi clients:
- the parameter as5G corresponds to the TR-181 parameter Device.WiFi.AccessPoint.{j}.AssociatedDevice.{i}.AuthenticationState;
- the parameter as2G4 corresponds to the TR-181 parameter Device.WiFi.AccessPoint.{k}.AssociatedDevice.{i}.AuthenticationState;
- the parameter ss5G corresponds to the TR-181 parameter Device.WiFi.AccessPoint{j}.AssociatedDevice.{i}.SignalStrength; and
- the parameter ss2G4 corresponds to the TR-181 parameter Device.WiFi.AccessPoint.{k}.AssociatedDevice.{i}.SignalStrength.
Herein, {j} and {k} respectively correspond to the TR-181 access point instance for access point 101.

In accordance with step 302, the RSSI monitor 404 monitors the RSSI over the preferred frequency band PREF1 and the connection establisher 402 automatically instructs the WLAN transceiver to disassociate from the preferred 5 GHz frequency band and to switch to the 2.4 GHz frequency band as soon as the monitored RSSI drops below a first threshold value, e.g. - 70 dB. The connection establisher 402 shall update the parameters as5G and as2G4 to correctly reflect the switch from 5 Ghz to 2.4 GHz frequency band.

In step 303, the disconnection detector 403 detects the switching from the preferred frequency band PREF1 to the alternative frequency band ALT1. The disconnection detector 403 thereto monitors the above ss5G parameter and as5G parameter. As soon as the ss5G parameter drops below -70 dB at a point in time where the as5G parameter is true, the disconnection detector 403 anticipates a switch band event and sets a boolean parameter expectSwitchBand true to indicate that a switch from the preferred frequency band PREF1 to the alternative frequency band ALT1 is expected. The disconnection detector 403 thereupon starts monitoring the as5G and as2G4 parameters. As soon as the as5G parameter becomes false and the as2G4 parameter becomes true while the expectSwitchBand parameter is true, the disconnection detector 403 determines that the switch from preferred frequency band PREF1 to alternative frequency band ALT1 has successfully taken place. It consequently sets the value of a boolean parameter SwitchBand equal to true to indicate that at switch from preferred to alternative frequency band has taken place. The expectSwitchBand parameter is again made false.

In step 304, the WiFi client 102 is now operating on the alternative 2.4 GHz frequency band, and the RSSI monitor 404 monitors the RSSI or signal strength 411 of the preferred frequency band PREF1 at WiFi client 102. A further indicated by step 305, the disconnection detector 403 instructs the comparator 405 to compare the RSSI or signal strength 411 monitored by RSSI monitor 404 for the preferred 5 GHz frequency band PREF1 with a second threshold value, 412 or T2, maintained in a threshold memory or register 406. Monitoring the RSSI 411 over the preferred frequency band, i.e. step 304, and comparing the monitored RSSI 411 with the second threshold T2, i.e. step 305, are repeated as long as the WiFi client 102 stays connected to access point 101 over the alternative frequency band ALT1. The RSSI or signal strength 411 for the preferred 5 GHz frequency band can be acquired from the WiFi client's WiFi scan since at this point it is not connected to this frequency band. If the preferred frequency band is not present in the scan results, the RSSI value is set to a very low value, for instance -100 dBm. The comparator 405 hence repeatedly compares the ss5G parameter value with the second threshold value T2, for instance -50 if it is preferred that the connection over the preferred frequency and is reestablished as soon as the signal strength of this frequency band again exceeds -50 dB.

As soon as the measured RSSI value for the preferred frequency band PREF1 exceeds the second threshold value T2 in step 305, the trigger unit 407 triggers a WiFi connection reset as is indicated by step 306. The trigger unit 407 instructs the connection establisher 402 to disassociate from the alternative 2.4 GHz frequency band and to associate with the 5 GHz frequency band (by using for instance the IEEE 802.11v protocol for remote management of WiFi clients), whereupon the connection establisher 402 controls the WLAN transceiver 408 to implement the re-connect to the 5 GHz frequency band and to adapt the above parameter values as5G and as2G4 as soon as this is realized. The SwitchBand parameter is again set false.

The unique benefit of the above described frequency band selection mechanism lies in its capability to optimize the home or office WLAN network by simple opportunistic band steering to a prefferrable band when the right conditions are met. The present invention captures the mobility aspect within home or office networks reflected through the space dependend RSSI curve on multiple frequency bands, and leverages the TR-181 protocol for remote management. Advantage of the proposed frequency band selection mechanism in respect to the existing ones in other words lies in its ability to detect potential for the end user to move to a higher, more preferred frequency band if possible, and thereby increase the achievable throughput and consequently improve the quality of experience. At the same time, the alternative lower frequency band has more resources at disposal that can be dedicated to the users located further away from the access point and potentially improve their quality of experience as well.

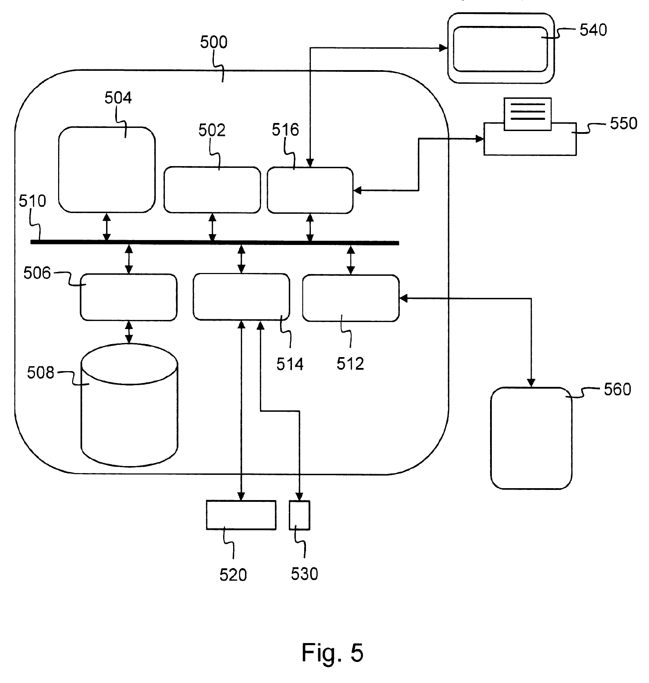

Fig. 5 shows a suitable computing system 500 for hosting the frequency band selector according to the invention, an embodiment of which is drawn in Fig. 4, or components thereof like the disconnection detector 403, the comparator 405 and the trigger unit 407. Computing system 500 may in general be formed as a suitable general purpose computer and comprise a bus 510, a processor 502, a local memory 504, one or more optional input interfaces 514, one or more optional output interfaces 516, a communication interface 512, a storage element interface 506 and one or more storage elements 508. Bus 510 may comprise one or more conductors that permit communication among the components of the computing system. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator to input information to the computing device 500, such as a keyboard 520, a mouse 530, a pen, voice recognition and/or biometric mechanisms, etc. Output interface 516 may comprise one or more conventional mechanisms that output information to the operator, such as a display 540, a printer 550, a speaker, etc. Communication interface 512 may comprise any transceiver-like mechanism such as for example two 1 Gb Ethernet interfaces that enables computing system 500 to communicate with other devices and/or systems, for example mechanisms for communicating with one or more other computing systems. The communication interface 512 of computing system 500 may be connected to such another computing system 560 by means of a local area network (LAN) or a wide area network (WAN), such as for example the internet, in which case the other computing system 560 may for example comprise a suitable web server. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example 1TB SATA disk drives, and control the reading and writing of data to and/or from these storage elements 508. Although the storage element 508 above is described as a local disk, in general any other suitable computer-readable media such as a removable magnetic disk, optical storage media such as a CD or DVD, -ROM disk, solid state drives, flash memory cards, ... could be used.

The steps executed in the method for frequency band selection according to the present invention, an embodiment of which has been described here above with reference to Fig. 3, may be implemented as programming instructions stored in local memory 504 of the computing system 500 for execution by its processor 502. Alternatively the instructions may be stored on the storage element 508 or be accessible from another computing system 560 through the communication interface 512.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A frequency band selector for wireless connectivity between a client (102) that supports multiple frequency bands and an access point (101) that also supports said multiple frequency bands, said frequency band selector comprising:
- a memory (401) adapted to maintain knowledge on a preferred frequency band (PREF1) and alternative frequency band (ALT1) for said client (102);
- a connection establisher (402) adapted to establish a connection between said client (102) and said access point (101) over said preferred frequency band (PREF1), and adapted to switch connectivity between said client (102) and said access point (101) to said alternative frequency band (ALT1) in case of disconnection over said preferred frequency band (PREF1);
- a disconnection detector (403) adapted to detect disconnection between said client (102) and said access point (101) over said preferred frequency band (PREF1);
- a signal strength monitor (404) adapted to monitor a signal strength (RSSI) of said preferred frequency band (PREF1) at said client (102) at least while being connected to said access point (101) over said alternative frequency band (ALT1);
- a comparator (405) adapted to compare said signal strength (RSSI) of said preferred frequency band (PREF1) at said client (102) with a predefined threshold (T2); and
- a triggering unit (407) adapted to trigger connection establishment between said client (102) and said access point (101) over said preferred frequency band (PREF1) when said signal strength (RSSI) exceeds said predefined threshold (T2).

2. A frequency band selector according to claim 1, wherein said client (102) is a WiFi client and said access point (101) is a WiFi access point.

3. A frequency band selector according to claim 2, wherein said multiple frequency bands (PREF1, ALT1) comprise a 2.4 GHz frequency band and a 5 GHz frequency band, and wherein said preferred frequency band (PREF1) corresponds to said 5 GHz frequency band and said alternative frequency band (ALT1) corresponds to said 2.4 GHz frequency band.

4. A frequency band selector according to claim 1, wherein said signal strength corresponds to the Received Signals Strength Indicator, abbreviated RSSI.

5. A method for selecting a frequency band for wireless connectivity between a client (102) that supports multiple frequency bands and an access point (101) that also supports said multiple frequency bands, said method comprising:
- maintaining (301) knowledge on a preferred frequency band (PREF1) and an alternative frequency band for said client (102);
- establishing a connection between said client (102) and said access point (101) over said preferred frequency band (PREF1) and switching connectivity between said client (102) and said access point (101) to said alternative frequency band (ALT1) in case of disconnection over said preferred frequency band (PREF1);
- detecting (203) disconnection between said client (102) and said access point (101) over said preferred frequency band (PREF1);
- monitoring (304) a signal strength (RSSI) of said preferred frequency band (PREF1) at said client (102) at least while being connected to said access point (101) over said alternative frequency band (ALT1);
- comparing (305) said signal strength (RSSI) of said preferred frequency band (PREF1) at said client (102) with a predefined threshold (T2); and
- triggering (306) connection establishment between said client (102) and said access point (101) over said preferred frequency band (PREF1) when said signal strength (RSSI) exceeds said predefined threshold (T2).
